Europäisches Patentamt

European Patent Office

Office européen des brevets

(11) Publication number: **0 117 629**
**B1**

# (12) EUROPEAN PATENT SPECIFICATION

(45) Date of publication of patent specification: **16.04.86**

(21) Application number: **84300472.2**

(22) Date of filing: **26.01.84**

(51) Int. Cl.⁴: **C 03 B 9/44,** C 03 B 9/16

(54) Take-out machanism for removing articles of glassware from a mould.

(30) Priority: **29.01.83 GB 8302504**

(43) Date of publication of application:
**05.09.84 Bulletin 84/36**

(45) Publication of the grant of the patent:
**16.04.86 Bulletin 86/16**

(84) Designated Contracting States:
**DE FR IT**

(56) References cited:
**US-A-4 298 373**

(73) Proprietor: **EMHART INDUSTRIES, INC.**
**426 Colt Highway**
**Farmington Connecticut 06032 (US)**

(72) Inventor: **Nebelung, Hermann Heinrich**
**Baslerstrasse 29**
**CH-8048 Zürich (CH)**
Inventor: **Futterknecht, Fritz**
**Schutzenhausstrasse 17**
**CH-8618 Oetwil am See Zürich (CH)**

(74) Representative: **Drury, Peter Lawrence et al**
**Emhart Patents Department P.O. Box 88 Ross**
**Walk**
**Belgrave Leicester LE4 5BX (GB)**

Courier Press, Leamington Spa, England.

## Descriptions

This invention is concerned with a take-out mechanism for removing articles of glassware from a mould and releasing them on to a dead-plate, the mechanism comprising gripping means operable to grip an article when the gripping means is in a gripping position thereof and to release the article when the gripping means is in a releasing position thereof, an arm on which the gripping means is mounted, turning means operative to turn the arm above a horizontal axis to move the gripping means between its gripping and releasing positions, and control means operative to control the turning means so that the turning means moves the gripping means to its gripping position when an article is to be removed from a mould and moves the gripping means from its gripping position to its releasing position when an article has been gripped by the gripping means.

Machines of the so-called "individual section" type for manufacturing articles of glassware comprise a take-out mechanism which is used for removing the articles of glass-ware from a mould and releasing them on to a dead plate for subsequent removal from the machine. These take-out mechanisms comprise gripping means in the form of tongs which are operable to grip articles when the tongs are in a gripping position thereof above the mould and to release the articles when the tongs are in a releasing position thereof above the deadplate. The tongs are mounted on an arm which is rotatable through approximately 180° about a horizontal axis to bring the tongs to their gripping and releasing positions. Such take-out mechanism also comprise turning means operative to turn the arm as aforesaid, the turning means comprising a piston and cylinder assembly operative to drive a rack which is meshed with a gear on which the arm is mounted. In the operation of such take-out mechanisms, the tongs pause in their releasing position after releasing the article until a further article is ready to be gripped. Then the tongs are moved rapidly from their releasing position to their gripping position where they are held stationary while they grip the article and are then moved back to their releasing position. Thus, when an article is ready to be gripped, the tongs make their full movement from their releasing position to their gripping position and the time required to make this movement is a limiting factor on the speed of operation of the machine.

It is an object of the present invention to provide a take-out mechanism having gripping means which is rapidly movable to its gripping position when an article of glassware is to be gripped.

The invention provides a take-out mechanism for removing articles of glassware from a mould and releasing them on to a deadplate, the mechanism comprising gripping means operable to grip an article when the gripping means is in a gripping position thereof and to release the article when the gripping means is in a releasing position thereof, an arm on which the gripping means is mounted, turning means operative to turn the arm about a horizontal axis to move the gripping means between its gripping and releasing positons, and control means operative to control the turning means so that the turning means moves the gripping means to its gripping position when an article is to be removed from a mould and moves the gripping means from its gripping position to its releasing position when an article has been gripped by the gripping means, characterised in that the control means is operative when an article has been released by the gripping means to cause the turning means to move the gripping means from its releasing position to an intermediate position at which the gripping means rests before moving to its gripping position.

In a take-out mechanism according to thr last preceding paragraph, the gripping means rests in an intermediate position and so only needs to be moved from the intermediate position to its gripping position when an article of glassware is ready to be gripped. Since the distance to be moved is less than in conventional take-out mechanisms, this movement can be carried out more rapidly. Futhermore, the intermediate position can be arranged to be convenient for maintenance and/or adjustment of the machine of which the take-out mechanism forms part thereby avoiding the necessity for providing a latch for holding the gripping means in such a convenient position as is the common practice.

The turning means may comprise a hydraulic piston and cylinder assembly operative, when the piston thereof is moved in a first direction in the cylinder, to turn the arm so that the gripping means is moved towards its gripping position and, when the piston is moved in a second direction which is opposite to the first direction, to turn the arm so that the gripping means is moved towards its releasing position. In that case, a simple and cheap arrangement which avoids the necessity for modification to the mechanical parts of the take-out mechanism is provided when the control means comprises actuating means operative to introduce a control led quality of fluid into the cylinder to cause the piston to move in the first direction through a predetermined distance thereby causing the gripping means to be moved to its intermediate position.

Conveniently, the actuating means may comprise a hydraulic piston and cylinder assembly arranged to be filled with fluid as the gripping means is moved to its gripping position from its intermediate position and to transfer fluid to the piston and cylinder assembly of the turning means to cause the gripping means to be moved to its intermediate position.

In order to allow adjustment of the intermediate position of the gripping means, an adjustable stop is arranged to limit filling of the hydraulic piston and cylinder assembly of the actuating means to thereby determine the intermediate position of the gripping means.

In order to control the rate at which the gripping means is moved to its gripping position, the rate at which fluid is transferred from the actuating means to the piston and cylinder assembly of the turning means is controlled by an adjusting restrictor.

In order to increase the speed of operation of the machine, the control means may be arranged to establish a regenerative circuit when the gripping means moves from its gripping position to its releasing position. This arrangement provides that fluid exhausted from the piston and cylinder assembly during this movement is supplied to the entry port thereof, thereby increasing the speed of movement of the piston and therefore of the gripping means.

In order to increase the ease of maintenance and/or adjustment of the machine, conveniently the intermediate position of the gripping means is arranged to be substantially halfway between its gripping position and its releasing position.

There now follows a detailed description, to be read with reference to the accompanying drawings, of a take-out mechanism which is illustrative of the invention. It is to be understood that the illustrative take-out mechanism has been selected for description by way of example and not of limitation of the invention.

In the drawings:

Figures 1 is a side elevational view, with parts broken away to show the construction, of the illustrative take-out mechanism; and

Figure 2 is a diagrammatic view of the hydraulic circuit of the illustrative take-out mechanism.

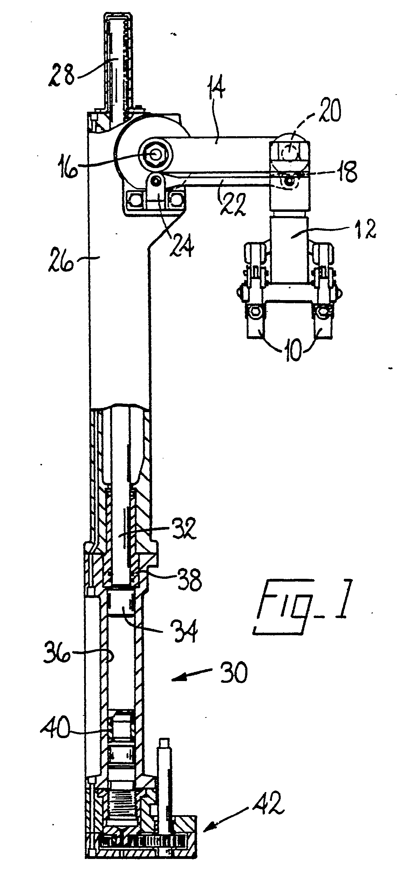

The illustrative take-out mechanism is for removing articles of glassware from a mould and releasing them on to a deadplate. The mechanism is particularly suitable for use in an individual section type glassware container manufacturing machine. The mechanism comprises gripping means on the form of two pairs of tongs 10 mounted on a support therefor 12. The support 12 comprises a piston and cylinder assembly operable to cause the tongs to grip an article or to release the article when required. The support 12 is mounted on arm 14 and the mechanism comprises turning means (to be described) operable to turn the arm 14 about a horizontal axis 16 to move the tongs 10 between a gripping position thereof in which the tongs are operable to grip an article and a releasing position thereof in which the tongs 10 are operable to release the article. In Figure 1, the tongs 10 are shown in their releasing position and reach their gripping position by a rotation of the arm 14 anti-clockwise about the axis 16 through approximately 180°. While this 180° rotation of the arm 14 is taking place, a parallelogram linkage maintains the support 12 for the tongs in vertical alignment. The parellelogram linkage comprises a lever 18 extending from a pivot pin supported on the arm 14 and on which the support 12 is mounted. The lever 18 is pivotally connected to a link 22 of the parallelogram arrangement which is in turn pivotally linked to a bracket 24 secured to a fixed housing 26 of the take-out mechanism.

The aforementioned turning means of the illustrative take-out mechanism comprises a gear (not shown) to which the arm 14 is secured and which is rotatable about the axis 16. This gear meshes with a rack 28 which is movable within the housing 26 under the action of a piston and cylinder assembly 30. The rack 28 is secured to a piston rod 32 of the piston and cylinder assembly 30 which extends upwardly from a piston 34 movable in the cylinder 36 of the assembly 30. The piston rod 32 passes through an upper end cap 38 of the assembly 30 which is fixed in position but the lower end position of the piston 34 is determined by movement of an adjustable end cap 40 which may be screwed upwardly or downwardly in the cylinder 36 by means of a gear arrangement 42.

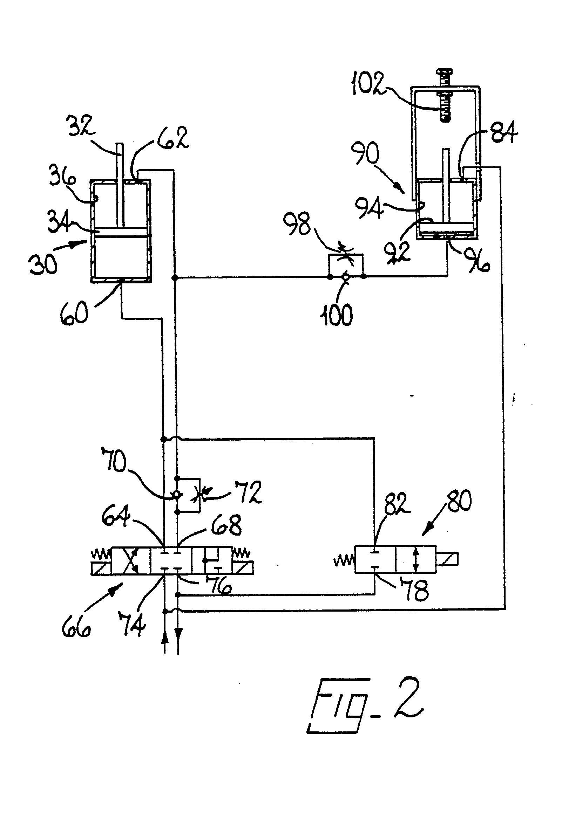

The illustrative take-out mechanism also comprises control means shown diagrammatically in Figure 2. The control means is operative, when an article has been released by the tongs 10 to cause the turning means to move the tongs 10 from their releasing position to an intermediate position at which the tongs rest before moving to their gripping position. The intermediate position of the tongs 10 is reached when the arm 14 points vertically upwards from the axis 16. When the tongs 10 are in their releasing position, the piston 34 abuts the end cap 38 of the cylinder 36 and, in order to move the tongs 10 to their intermediate position, the piston 34 is moved downwardly to a halfway position in the cylinder 36. As this occurs, the rack 28 moves vertically and causes the gear to turn about the axis 16 thereby moving the arm 14 also about the axis 16. The control means is also operative to control the turning means so that the turning means moves the tongs 10 to their gripping position when an article is to be removed from a mould and moves the tongs 10 from their gripping position to their releasing position when an article has been gripped by the tongs 10. In order to bring the tongs 10 to their gripping position the piston 34 is moved downwardly in the cylinder 36 from its intermediate position into abutment with the adjustable end cap 40. In order to move the tongs 10 from their gripping position to their releasing position, the piston 34 is moved upwardly in the cylinder 36 from abutment with the adjustable end cap 40 into abutment with the end cap 38. The turning means thus comprises the hydraulic piston and cylinder assembly 30 operative, when the piston 34 thereof is moved in a first direction in the cylinder, i.e. downwardly, to turn the arm 14 so that the tongs 10 are moved towards their gripping position. Also, when the piston 34 is moved in a second direction, i.e. upwardly, which is opposite to the first direction, the turning means is operative to turn the arm 14 so that the tongs 10 are moved towards their releasing position.

The hydraulic piston and cylinder assembly 30 is shown in Figure 2 in diagrammatic form and has an entry port 60 beneath the piston 34 and an entry port 62 above the piston 34. The entry port 60 is connected to a port 64 of a three position valve 66 which is solenoid-actuable. The valve 66 has a further port 68 which is connected, via a non-return valve 70 in parallel with an adjustable restrictor 72, to the port 62 of the cylinder 36. A further port 74 of the valve 66 is connected to a pump of the hydraulic circuit (not shown) and a fourth port 76 of the valve 66 is connected to a tank. The line between the port 76 of the valve 66 and the tank is also connected to a port 78 of a solenoid-actuatable valve 80. The valve 80 also has a port 82 which is connected to the line between the port 64 of the valve 66 and the port 60 of the cylinder 36. The pump is also connected to a port 84 of a hydraulic piston and cylinder assembly 90 of the control means. The port 84 is above a piston 92 of the assembly 90 which is movable in a cylinder 94 of the assembly 90. The cylinder 94 also has a port 96 beneath the piston 92 which is connected via a restrictor 98 to the line between the non-return valve 70 and the port 62 of the cylinder 36. The restrictor 98 is bypassed by a non-return valve 100 which allows fluid to flow into the cylinder 94 through the port 96. The piston and cylinder assembly 90 forms actuating means of the control means operative to introduce a controlled quantity of fluid into the cylinder 36 of the assembly 30 to cause the piston to move downwardly through a predetermined distance thereby causing the tongs 10 to be moved to their intermediate position. The intermediate position of the tongs 10 is arranged to be substantially halfway between their gripping position and their releasing position so that the cylinder 94 is of substantially half the volume of the cylinder 36. The hydraulic piston and cylinder assembly 90 is arranged to be filled with fluid as the tongs 10 are moved towards their gripping position from their intermediate position and subsequently to transfer fluid to the cylinder 36 to cause the gripping means to be moved to their intermediate position. The restrictor 98 is adjustable and controls the rate at which fluid is transferred from the cylinder 94 to the cylinder 36.

The operation of the hydraulic circuit shown in Figure 2 will now be described in detail. The rest position of the circuit is shown in Figure 2 when the tongs 10 are in their intermediate position with the piston 34 in its halfway position in the cylinder 36. When it is desired to move the tongs 10 to their gripping position, the valve 66 is actuated moving its spool to the right (viewing Figure 2). This causes the port 74 of the valve 66 to be connected to the port 68 thereof and the port 76 to be connected to the port 64. This means that hydraulic fluid from the pump can flow from the port 74 to the port 68 through the non-return valve 70 and into the port 62 of the cylinder 36. Meanwhile the port 60 of the cylinder 36 is connected via the ports 64 and 76 to the tank. Accordingly, the piston 34 is moved downwardly in the cylinder 36 bringing the tongs 10 to their gripping position. Meanwhile, the fluid flowing from the pump to the port 62 also flows through the non-return valve 100 to the port 96 of the cylinder 94. Since the piston rod of the piston 92 is on the upper side thereof, the fluid entering the cylinder 94 through the port 96 acts on a greater area of the piston 92 than does the fluid entering the port 84 of the cylinder 94 so that the piston 92 moves upwardly in the piston 94 which fills with hydraulic fluid.

When the tongs 10 have gripped articles at the gripping position, the spool of the valve 66 is moved to the left (viewing Figure 2). This causes the port 74 of the valve 66 to be connected both to the port 64 and also to the port 68 of the valve. The port 76 of the valve 66 is closed. This means that the port 60 of the cylinder 36 is connected to pump via the port 64 and the port 62 of the cylinder 36 is also connected to the pump via the port 64 and the port 62 of the cylinder 36 is also connected to the pump via the port 74; since the piston rod 32 of the piston 34 projects upwardly from the piston 34, the fluid entering the cylinder 36 through the port 60 acts on a greater area than does the fluid entering the cylinder 36 through the port 62. Therefore, the piston 34 moves upwardly in the cylinder 36 at a rate controlled by the restrictor 72 through which the fluid flows to reach the port 68. The fluid forced out through the port 62 passes through the port 68 and into the connection between the ports 74 and 64 so that it is then introduced into the cylinder 36 through the port 60. Thus, a regenerative circuit is established when the tongs 10 are moved from their gripping position to their releasing position, i.e. the exhaust is coupled to the input port. The tongs now move to their releasing position at a rate controlled by the setting of the restrictor 72. During this movement, the piston 92 remains stationary at the upper position in the cylinder 94 since the port 96 is connected to pump as is the port 84. When the articles carried by the tongs 10 have been released at the releasing position and it is desired to move the tongs to their intermediate position, the valve 66 is moved to its central position (shown in Figure 2) in which the ports 64, 68, 74, and 76 are all closed. Then the valve 80 is operated to connect the port 78 to the port 83 thereof. In this case the port 60 of the cylinder 36 is connected to tank via the ports 82 and 78 and the fluid pressure on the piston 92 from the port 84 is not opposed so that the piston 92 moves downwardly in the cylinder 94 at a rate determined by the restrictor 98 and introduces the fluid from the cylinder 94 into the cylinder 36 through the port 62. This brings the circuit back to its starting position shown in Figure 2.

In order to enable the intermediate position of the tongs 10 to be adjusted, an adjustable stop screw 102 is mounted above the cylinder 94 to engage the piston rod of the piston 92 and thereby limit the quantity of fluid which can enter the cylinder 94.

Since the tongs 10 have only to move from their intermediate position to their gripping position when an article is to be gripped, the operation of the take-out mechanism is rapid. Furthermore, since the intermediate position of the tongs 10 is convenient for maintenance and adjustment of the machine, being neither above the mould nor above the deadplate, maintenance and/or adjustment is made more easy.

## Claims

1. A take-out mechanism for removing articles of glassware from a mould and releasing them on to a dead-plate, the mechanism comprising gripping means (10) operable to grip an article when the gripping means is in a gripping position thereof and to release the article when the gripping means is in a releasing position thereof, an arm (14) on which the gripping means is mounted, turning means (30) operative to turn the arm (14) about a horizontal axis (16) to move the gripping means (10) between its gripping and releasing positions, and control means (66, 80, 90) operative to control the turning means (30) so that the turning means moves the gripping means (10) to its gripping position when an article is to be removed from a mould and moves the gripping means from its gripping position to its releasing position when an article has been gripped by the gripping means, characterised in that the control means (66,80,90) is operative when an article has been released by the gripping means (10) to cause the turning means (30) to move the gripping means (10) from its releasing position to an intermediate position at which the gripping means (10) rests before moving to its gripping position.

2. A take-out mechanism according to claim 1, characterised in that the turning means (30) comprises a hydraulic piston and cylinder assembly (30) operative, when the piston (34) thereof is moved in a first direction in the cylinder (36), to turn the arm (14) so that the gripping means (10) is moved towards its gripping position and, when the piston (34) is moved in a second dierction which is opposite to the first direction which is opposite to the first direction, to turn the arm (14) so that the gripping means (10) is moved towards its releasing position, wherein the control means (66, 80, 90) comprises actuating means (90) operative to introduce a controlled quantity of fluid into the cylinder (36) to cause the piston (34) to move in the first direction through a predetermined distance thereby causing the gripping means (10) to be moved to its intermediate position.

3. A take-out mechanism according to claim 2, characterised in that the actuating means (90) comprises a hydraulic piston and cylinder assembly arranged to be filled with fluid as the gripping means (10) is moved to its gripping position from its intermediate position and to transfer fluid to the piston and cylinder assembly (30) of the turning means to cause the gripping means (10) to be moved to its intermediate position.

4. A take-out mechanism according to claim 3, characterised in that an adjustable stop (102) is arranged to limit filling of the hydraulic piston and cylinder assembly of the actuating means (90) to thereby determine the intermediate position of the gripping means (10).

5. A take-out mechanism according to any one of the claims 2, 3 and 4 characterised in that an adjustable restrictor (98) controls the rate at which fluid is transferred from the actuating means (90) to the piston and cylinder assembly (30) of the turning means.

6. A take-out mechanism according to any one of claims 1 to 5, characterised in that the control means (66, 80, 90) is arranged to establish a regenerative circuit when the gripping means (10) moves from its gripping position to its releasing position.

7. A take-out mechanism according to any one of claims 1 to 6, characterised in that the intermediate position of the gripping means (10) is arranged to be substantially halfway between its gripping position and its releasing position.

## Patentansprüche

1. Mechanismus zur Entnahme von Glasgegenständen aus einer Form und zum Absetzen dieser Gegenstände auf einer Platte, mit einer Greifeinrichtung, welche im Betrieb einen Gegenstand ergreift, wenn die Greifeinrichtung sich in einer Greifposition befindet und welche den Gegenstand freigibt, wenn diese Greifeinrichtung sich in einer Freigebeposition benindet, mit einem Arm, an welchem die Greifeinrichtung angeordnet ist, mit einer Dreheinrichtung, um im Betrieb den Arm um eine horizizontale Achse zu drehen und die Greifeinrichtung zwischen ihrer Greif- und Freigebeposition zu bewegen, und mit einer Steuereinrichtung zum Steuern der Dreheinrichtung, so daß die Dreheinrichtung die Greifeinrichtung in deren Greifposition bewegt, wenn ein Gegenstand aus einer Form zu entnehmen ist und diese Greifeinrichtung aus ihrer Greifposition in ihre Freigebeposition bewegt, wenn von der Greifeinrichtung ein Gegenstand ergriffen ist, dadurch gekennzeichnet, daß die Steuereinrichtung (66, 80, 90) wirksam ist, wenn ein Gegenstand von der Greifeinrichtung (10) freigegeben ist, um die Dreheinrichtung (30) zu veranlassen, die Greifeinrichtung (10) aus ihrer Freigebeposition zu einer Zwischenposition zu bewegen, in welcher die Greifeinrichtung (10) verbleibt, bevor sie sich zu ihrer Greifposition bewegt.

2. Mechanismus nach Anspruch 1, dadurch gekennzeichnet, daß die Dreheinrichtung (30) eine hydraulische Kolben- und Zylonderanordnung (30) umfaßt, welche, wenn ihr Kolben (34) in eine erste Richtung in dem Zylinder (36) bewgt ist, den Arm (14) dreht, so daß die Greifeinrichtung (10) zu ihrer Greifposition bewegt wird und welche, wenn der Kolben (34) in eine zweite Richtung bewegt ist, welche der ersten Richtung entgegengesetzt ist, den Arm (14) dreht, so daß die Greifeinrichtung (10) zu ihrer Freigebeposition bewegt wird, daß die Steuereinrichtung (66, 80, 90) eine Betätigungseinrichtung (90) ein-

schließt, welche im Betrieb eine gesteuerte Fluidmenge in den Zylinder (36) einführt, um den Kolben (34) zu veranlassen, sich in die erste Richtung um einen vorbestimmten Abstand zu bewegen, um somit die Greifeinrichtung (10) in ihre Zwischenposition zu bewegen.

3. Mechanismus nach Anspruch 2, dadurch gekennzeichnet, daß die Betätigungseinrichtung (90) eine hydraulische Kolben- und Zylinderanordnung umfaßt, welche mit Fluid füllbar ist, wenn die Greifeinrichtung (10) aus ihrer Zwischenposition zu ihrer Greifposition bewegt wird und Fluid zu der Kolben- und Zylinderanordnung (30) der Dreheinrichtung führt, um zu verursachen, daß sich die Greifeinrichtung (10) in ihre Zwischenposition bewegt.

4. Mechanismus nach Anspruch 3, dadurch gekennzeichnet, daß ein einstellbarer Anschlag (102) angeordnet ist, um ein Füllen der hydraulischen Kolben- und Zylinderanordnung der Betätigungseinrichtung (90) zu begrenzen, um somit die Zwischenposition der Greifeinrichtung (10) zu bestimmen.

5. Mechanismus nach einem der Ansprüche 2, 3 und 4, dadurch gekennzeichnet, daß eine einstellbare Drossel (98) die Geschwindigkeit steuert, mit welcher Fluid von der Betätigungseinrichtung (90) zu der Kolben- und Zylinderanordnung (30) der Dreheinrichtung transportiert wird.

6. Mechanismus nach einem der Ansprüche 1 bis 5, dadurch gekennzeichnet, daß die Steuereinrichtung (66, 80, 90) so angeordnet ist, daß sie einen Rückkopplungskreis aufbaut, wenn die Greifeinrichtung (10) sich von ihrer Greifposition zu ihrer Freigebeposition bewegt.

7. Mechanismus nach einem der Ansprüche 1 bis 6, dadurch gekennzeichnet, daß die Zwischenposition der Greifeinrichtung (10) im wesentlichen in der Mitte zwischen ihrer Greifposition und ihrer Freigebeposition angeordnet ist.

**Revendications**

1. Mécanisme de démoulage destiné à extraire des articles de verre d'un moule et à les décharger sur une table de dépose, le méchanisme comprenant des moyens de préhension (10) pouvant être actionnés pour saisir un article lorsque les moyens de préhension se trouvent dans leur position de préhension, et pour décharger l'article lorsque les moyens de préhension se trouvent dans leur position de déchargement, un bras (14) sur lequel les moyens de préhension sont montés, des moyens de rotation (30) qui peuvent agir pour faire tourner le bras (14) autour d'un axe horizontal (16) afin de déplacer les moyens de préhension (10) entre leur position de préhension et leur position de déchargement, et des moyens de commande (66, 80, 90) qui peuvent agir pour commander les moyens de rotation (30) de telle manière que les moyens de rotation amènent les moyens de préhension (10) à leur position de préhension lorsqu'un article doit être extrait d'un moule et qui font passer les moyens de préhension de leur position de préhension à leur position de déchargement lorsqu'un article a été saisi par les moyens de préhension, caractérisé en ce que les moyens de commande (60, 80, 90) peuvent agir lorsqu'un article a été déchargé par les moyens de préhension (10) pour amener les moyens de rotation (30) à déplacer les moyens de préhension (10) de leur position de déchargement à une position intermédiare dans laquelle les moyens de préhension (10) s'arrêtent avant de se déplacer dans leur position de préhension.

Mécanisme de démoulage selon la revendication 1, caractérisé en ce que les moyens de rotation (30) comprennent un ensemble hydraulique à piston et cylindre (30) qui peut agir, lorsque son piston (34) se déplace dans un premier sens dans le cylindre (36), pour faire tourner le bras (14) de manière que les moyens de préhension (10) soient déplacés vers leur position de préhension et, lorsque le piston (34) se déplace dans un deuxième sens qui est l'inverse du premier sens, pour faire tourner le bras (14) de telle manière que les moyens de préhension (10) soient déplacés vers leur position de déchargement et dans lequel les moyens de commande (66, 80, 90) comprennent des moyens d'actionnement (90) qui peuvent agir pour introduire une quantité réglée de fluide dans le cylindre (36) pour amener le piston (34) à se déplacer dans le premier sens sur un distance prédéterminée, en amenant ainsi les moyens de préhension (10) à être déplacés dans leur position intermédiaire.

3. Mécanisme de démoulage selon la revendication 2, caractérisé en ce que les moyens d'actionnement (90) comprennent un ensemble hydraulique à piston et cylindre agencé pour être rempli de fluide lorsque les moyens de préhension (10) sont amenés à leur position de préhension à partir de leur position intermédiaire, et pour transférer le fluide à l'ensemble à piston et cylindre (30) des moyens de rotation pour amener les moyens de préhension (10) à être déplacés dans leur position intermédiaire.

4. Mécanisme de démoulage selon la revendication 3, caractérisé en ce qu'une butée réglable (102) est agencée pour limiter le remplissage de l'ensemble hydraulique à piston et cylindre des moyens d'actionnement (90) pour déterminer de cette façon la position intermédiaire des moyens de préhension (10).

5. Mécanisme de démoulage selon l'une quelconque des revendications 2, 3 et 4, caractérisé en ce qu'un étranglement réglable (98) commande le débit auquel le fluide est transféré des moyens d'actionnement (90) à l'ensemble piston et cylindre (30) des moyens de rotation.

6. Mécanisme de démoulage selon l'une quelconque des revendications 1 à 5, caractérisé en ce que les moyens de commande (66, 80, 90) sont agencés pour établir un circuit de récupération lorsque les moyens de préhension (10) se déplacement de leur position de préhension à leur position de déchargement.

7. Mécanisme de démoulage selon l'une quelconque des revendications 1 à 6, caractérisé en ce que la position intermédiare des moyens de préhension (10) est agencée de façon à se trouver à peu près à mini-chemin entre leur position de préhension et leur position de déchargement.

28

14

20

16

18

22

12

24

26

10

32

38

34

*Fig_1*

36

30

40

42

Fig. 2